# FASCICULE DE BREVET EUROPEEN

(11) **EP 4 659 112 B1**
(45) Date de publication et mention de la délivrance du brevet: **18.11.2026**
(21) Numéro de dépôt: 24711600.7
(22) Date de dépôt: 23.01.2024
(51) Int. Cl.: G06F 13/42

(54) **PROCÉDÉ DE COMMUNICATION POUR UN CAPTEUR COMPRENANT UNE MÉMOIRE**
KOMMUNIKATIONSVERFAHREN FÜR EINEN SENSOR MIT EINEM SPEICHER
COMMUNICATION METHOD FOR A SENSOR COMPRISING A MEMORY

(30) Priorité: 31.01.2023 FR 2300859
(43) Date de publication de la demande: 10.12.2025
(73) Titulaire: Safran Aerosystems, 78370 Plaisir (FR)
(72) Inventeur: RACIC, Zoran, 77550 Moissy-Cramayel (FR)
(74) Mandataire: Ernest Gutmann - Yves Plasseraud S.A.S.
(86) Numéro de dépôt international: PCT/FR2024/050084
(87) Numéro de publication internationale: WO 2024/161076

(56) Documents cités:
- HELSON R B ED - PIEPER JEFF: "The HART@? protocol an enabler for improved plant performance", ISA TRANSACTIONS, INSTRUMENT SOCIETY OF AMERICA. PITTSBURGH, US, vol. 35, no. 2, 1 January 1996 (1996-01-01), pages 159 - 164, XP004020120, ISSN: 0019-0578, DOI: 10.1016/0019-0578(96)00023-7

## Description

### Domaine technique de l'invention

L'invention concerne un procédé de communication de signaux et d'alimentation électrique, notamment dans un environnement aéronautique, en particulier à bord d'un aéronef.

### Etat de la technique antérieure

Le contrôle d'un aéronef nécessite la mise en oeuvre d'un grand nombre de capteurs et de sondes de mesure permettant un suivi continu de grandeurs critiques pour le bon fonctionnement de l'aéronef.

Certains de ces capteurs et de ces sondes doivent être disposés dans des environnements difficiles d'accès et/ou présentant des contraintes opérationnelles importantes.

Un exemple de tel environnement est un réservoir de carburant de l'aéronef, constituant un espace clos et nécessitant une protection importante, dont les possibilités d'accès et de câblage utilisable sont limitées.

De plus, un espace interne d'un tel réservoir contient du carburant sous forme de vapeur, et constitue donc une atmosphère explosive avec tous les risques associés. Une telle atmosphère explosive limite fortement les courants électriques et les puissances utilisées, ainsi que l'emploi de composants électroniques complexes pouvant générer un échauffement et/ou une étincelle.

Ainsi, des interfaces de connexion mono-fil sont privilégiées, alimentant des capteurs analogiques passifs et recueillant le signal de réponse à l'excitation d'alimentation par un câble unique.

Dans le cas d'un capteur placé dans un réservoir de carburant, tel qu'une une sonde de niveau de carburant ou un densimètre, le capteur est de type capacitif et fonctionne par envoi d'une tension d'excitation et par mesure du signal analogique de réponse.

Par ailleurs, il est souhaitable d'avoir accès aux donnée spécifiques relatives au capteur, telles que des données de calibration spécifiques du capteur, pour améliorer la précision des mesures. De telles données sont, de préférences, stockées directement sur le capteur et l'accès y est possible par la même connectique que les mesures.

Cela permet leur attribution au capteur spécifique dont elles dépendent sans risque de confusion. De plus, un nouvel accès est possible à chaque fois que cela est nécessaire, comme lors d'un redémarrage d'un système de contrôle du capteur.

Cependant, de telles données sont stockées sous forme numérique sur un composant électronique de type mémoire, qui est susceptible de perturber une communication analogique classique.

### Présentation de l'invention

L'invention vise à remédier à ces inconvénients, en proposant une méthode de communication permettant à la fois de consulter des données stockées sur un composant électronique et de communiquer avec un capteur ou un actionneur fonctionnant de manière analogique.

A cet effet, l'invention a pour objet un procédé de communication d'un système de contrôle avec un capteur comprenant un composant analogique et un composant numérique. De plus, le système de contrôle est connecté au capteur par un unique câble, notamment comprenant une âme centrale et une couche de blindage périphérique. Plus spécifiquement, le procédé de communication comprend au moins :
- Une étape d'émission d'un signal analogique, au cours de laquelle le système de contrôle émet un signal analogique, pendant un premier intervalle de temps ;
- Une étape de réception d'une réponse, au cours de laquelle le système de contrôle reçoit une réponse du composant analogique ;
- Une étape d'émission d'un signal numérique d'interrogation, au cours de laquelle le système de contrôle émet un signal numérique d'interrogation du composant numérique, pendant un troisième intervalle de temps, et
- Une étape de réception d'un signal numérique de réponse, au cours de laquelle le système de contrôle reçoit un signal numérique de réponse du composant numérique, pendant un quatrième intervalle de temps.

Selon l'invention :
- le signal analogique varie dans une plage de tension s'étendant entre une borne inférieure et une borne supérieure,
- le signal numérique d'interrogation présente la tension haute d'interrogation,
- le signal numérique de réponse présente une tension haute de réponse,
la tension haute d'interrogation et tension haute de réponse étant supérieures à la borne supérieure du signal analogique.

Un tel procédé de communication permet de transmettre sur un câble ou fil unique une excitation analogique, une tension continue d'alimentation et des données numériques d'un composant numérique. Le nombre de fils ou câbles réduit amène des gains en masse, en points de connections et en composants de protection. Par ailleurs, les données stockées sur le composant numérique permettent d'améliorer un traitement des signaux analogiques fournis par le composant analogique.

Particulièrement, la réponse du composant analogique se fait via un fil de communication analogique spécifique.

De plus, la tension de charge du composant numérique doit être en dehors des tensions du signal analogique. Par ailleurs, la tension de charge du composant numérique peut être une tension continue.

Le procédé de communication peut comprendre au moins une étape d'émission d'une tension, au cours de laquelle le système de contrôle émet une tension de charge du composant numérique, pendant un deuxième intervalle de temps.

Le premier intervalle de temps, le deuxième intervalle de temps, le troisième intervalle de temps et le quatrième intervalle de temps peuvent être distincts et se suivre dans un ordre prédéterminé.

La tension haute d'interrogation peut être égale à la tension haute de réponse et/ou à la tension de charge. Une telle caractéristique permet d'assurer que le dispositif numérique ne perturbe pas le signal analogique.

Par ailleurs, la tension de charge peut être supérieure à la borne supérieure du signal analogique.

Le signal numérique d'interrogation peut présenter une tension basse d'interrogation nulle et/ou dans lequel le signal numérique de réponse présente une tension basse de réponse non-nulle.

La tension basse du signal numérique de réponse peut être strictement supérieure à la borne supérieure de la tension analogique. Une telle caractéristique permet de transmettre la réponse du composant numérique à travers des composants de séparation du composant analogique et du composant numérique.

Le composant numérique peut être une mémoire morte effaçable et programmable électriquement. Une telle caractéristique permet de stocker des données relatives au capteur directement sur le capteur, afin de conserver une association directe entre les données et le capteur qu'elles concernent spécifiquement et de pouvoir les relire régulièrement, directement à travers le système de contrôle.

Le signal numérique de réponse peut représenter des données relatives au capteur stockées sur le composant numérique, en particulier les données comprenant des données de calibration du composant analogique. Une telle caractéristique permet d'améliorer la précision des mesures effectuées par le capteur, en compensant les variations individuelles spécifiques du capteur, résultant par exemple des tolérances de fabrication.

L'invention concerne également un ensemble comprenant :
- un système de contrôle,
- un capteur comprenant un composant analogique et un composant numérique,
- un unique câble, notamment comprenant une âme centrale et une couche de blindage périphérique, apte à connecter le système de contrôle au capteur,
l'ensemble étant configuré pour mettre en œuvre un procédé de communication tel que décrit précédemment.

### Brève description des figures

La présente invention sera mieux comprise et d'autres caractéristiques et avantages apparaîtront encore à la lecture de la description détaillée qui suit comprenant des modes de réalisation en référence avec les figures annexées, présentés en tant qu'exemples non limitatifs, qui pourront servir à compléter la compréhension de la présente invention et l'exposé de sa réalisation et, le cas échéant, contribuer à sa définition, sur lesquelles :
[Fig. 1] est une représentation schématique d'un système de contrôle, d'un composant analogique et d'un composant numérique pour la mise en œuvre d'un procédé de communication selon l'invention, et
[Fig. 2] est une représentation graphique de signaux échangés au cours du procédé de communication selon l'invention.

### Description détaillée de l'invention

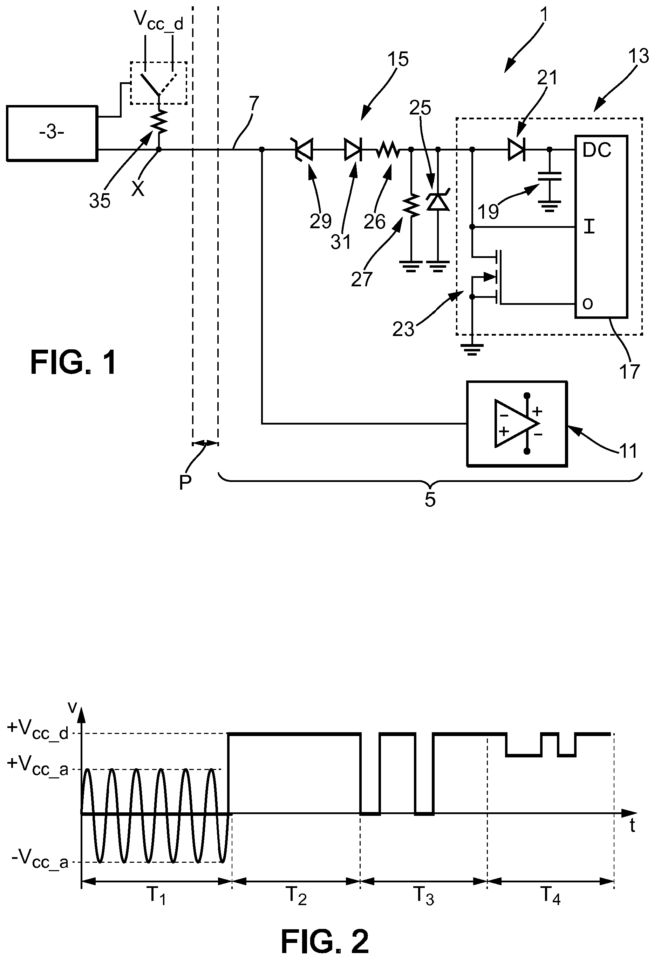

La figure 1 est une représentation schématique d'un ensemble 1 pour la mise en œuvre d'un procédé de communication selon l'invention.

L'ensemble 1 comprend au moins un système de contrôle 3 et un capteur 5 reliés électriquement entre eux par un unique câble 7.

L'ensemble 1 est notamment susceptible d'être embarqué à bord d'un aéronef et configuré pour mesurer une ou plusieurs grandeurs de l'aéronef au cours du vol.

Le système de contrôle 3 peut être un système informatique comprenant :
- au moins un processeur, apte à effectuer des calculs numériques et à exécuter des programmes informatiques, et
- au moins une mémoire, apte à stocker des données et des instructions pour la mise en œuvre de tels programmes informatiques.

Le câble 7 est représenté de manière schématique uniquement sur la figure 1.

Le câble 7 peut être notamment un fil de connexion de type coaxial comprenant une âme centrale conductrice à haute impédance et une couche de blindage périphérique jouant le rôle de masse. Plus particulièrement, le câble 7 est susceptible de traverser une paroi P, apte à séparer deux environnements distincts dans lesquelles sont disposées, d'une part, le système de contrôle 3 et, d'autre part, le capteur 5.

Le capteur 5 comprend :
- un composant analogique 11 directement connecté au câble 7, et
- un composant numérique 13 connecté au câble 7 à travers une interface 15.

Le composant analogique 11 est, par exemple, un capteur analogique passif, tel que, par exemple, une sonde capacitive de niveau de carburant dans un réservoir de l'aéronef, ou bien un densimètre.

Selon l'exemple de réalisation présenté, le composant analogique 11 fournit à un signal d'entrée analogique, également connu sous le terme d'excitation.

Le composant numérique 13 comprend, par exemple, une mémoire 17, en particulier de type mémoire morte effaçable et programmable électriquement, également dénommée par l'acronyme EEPROM pour « Electrically Erasable Programmable Read Only Memory » en anglais. La mémoire 17 est, par exemple, une mémoire de 1024 bits.

Un tel type de mémoire est un composant capable de stocker passivement des données sans requérir d'alimentation électrique, de sorte que des informations stockées ne sont pas perdues lorsque l'ensemble 1 n'est plus alimenté en électricité.

De plus, un tel composant passif nécessite une très faible quantité de courant électrique pour accéder aux données stockées et ne génère qu'une faible quantité de chaleur, pouvant être considérée négligeable.

La mémoire 17 peut être configurée pour stocker au moins des valeurs de paramètres d'étalonnage du composant analogique 11. De telles valeurs de paramètres d'étalonnage sont spécifiques au composant analogique 11 et permettent de prendre en compte des tolérances de fabrication.

La mémoire 17 présente, par exemple, une borne d'entrée I et une borne de sortie O, ainsi qu'une borne d'alimentation DC.

Le composant numérique 13 peut également comprendre un condensateur 19, en particulier calibré pour une alimentation de la mémoire 17 en courant continu pendant son fonctionnement, branché sur la borne d'alimentation DC de la mémoire 17 et alimenté par le câble 7 à travers l'interface 15.

Par ailleurs, le composant numérique 13 peut également comprendre une diode d'alimentation 21 disposée entre l'interface 15 et le condensateur 19 afin d'assurer l'alimentation de la mémoire 17 et d'éviter la décharge de ce dernier vers l'extérieur. La diode d'alimentation 21 est un exemple particulier et non limitatif de réalisation permettant d'assurer l'alimentation de la mémoire 17.

Le composant numérique peut également comprendre un interrupteur 23, notamment agencé pour connecter alternativement la borne d'entrée I ou la borne de sortie O de la mémoire 17 au câble 7 à travers l'interface 15 ou à une masse, formant ainsi une sortie de type drain ouvert.

Selon un mode particulier de réalisation, le condensateur 19, la diode d'alimentation 21 et l'interrupteur 23 peuvent être intégrés et formés partie intégrante à la mémoire 17. L'interface 15 peut comprendre une diode de contrôle 25, en particulier une diode Zener de contrôle 25, branchée en parallèle du composant numérique 13. La diode de contrôle 25 permet de limiter les tensions en entrée dans le composant numérique 13.

Selon un exemple de réalisation, l'interface 15 peut également comprendre :
- une résistance d'entrée 26, branchée en série, permettant de limiter le courant dans la diode de contrôle 25 ; et
- une diode d'entrée 29, notamment une diode Zener d'entrée 29, disposée en amont de la résistance d'entrée 26.

La diode d'entrée 29 est orientée en entrée vers le câble 7 de sorte à créer un décalage de tension du composant numérique 13. En effet, le composant numérique 13 n'est alimenté que si la tension en entrée est supérieure à la tension seuil de la diode d'entrée 29.

L'interface 15 peut également comprendre une diode de blocage 31, notamment une diode de blocage 31 standard, disposée en amont de la résistance d'entrée 26.

Plus particulièrement, la diode de blocage 31 est orientée en sens inverse, de façon à bloquer toutes les tensions négatives qui sont présentes lors de la communication analogique dans le câble 7.

L'interface 15 peut également comprendre une première résistance 27 branchée en parallèle de la diode de contrôle 26. La première résistance 27 permet d'imposer un niveau de tension nul lorsque la sortie du composant numérique 17 est à la masse. En effet, sans la première résistance 27, lorsque la diode de blocage 31 n'est pas passante à cause d'une tension d'entrée nulle ou négative, le potentiel serait flottant en entrée du composant numérique 13.

Le système de contrôle 3 est configuré pour communiquer avec le composant numérique 13 avec une tension haute Vcc_d, imposée grâce à une résistance de sortie 35, puisque la sortie du composant numérique 13 est une sortie de type drain ouvert. La résistance de sortie 35 est activée uniquement lors d'un échange avec le composant numérique 13.

La figure 2 une représentation graphique de signaux échangés au cours du procédé de communication selon l'invention. Plus spécifiquement, la figure 2 représente des tensions V, mesurées en un point X, transitant par le câble 7 durant différentes phases du procédé de communication selon l'invention.

Le point X est disposé entre le système de contrôle 3 et la diode d'entrée 29.

Le procédé de communication comprend une phase de communication analogique, comprenant une étape d'émission d'un signal analogique, au cours de laquelle le système de contrôle 3 émet un signal analogique pendant un premier intervalle de temps T1 et une étape de réception d'une réponse, au cours de laquelle le système de contrôle 3 reçoit une réponse du composant analogique 11.

Le signal analogique est avantageusement compris entre une borne inférieure, par exemple - Vcc_a, et une borne supérieure, par exemple Vcc_a de valeur opposée à la borne inférieure. Par exemple, la valeur de la borne supérieure est choisie inférieure à une tension de seuil de la diode d'entrée 29, afin de ne pas être perturbé par le composant numérique 13.

Par ailleurs, le signal analogique peut être, par exemple, un signal sinusoïdal.

La phase de communication analogique est représentée temporellement en premier sur la figure 2, mais peut intervenir avant et/ou après les autres étapes qui vont être décrite, et éventuellement de manière répétée au cours du procédé de communication.

Le procédé de communication comprend également des étapes permettant la communication avec le composant numérique 13, comprenant successivement une phase de charge, une phase d'interrogation et une phase de réponse.

La phase de charge comprend une étape d'émission d'une tension continue, au cours de laquelle le système de contrôle 3 émet une tension de charge du composant numérique 13 pendant un deuxième intervalle de temps T2, notamment une tension de charge continue. La tension de charge est choisie supérieure à la tension de seuil de la diode d'entrée 29, de façon à atteindre le condensateur 19. La tension de charge peut être, par exemple, égale à une valeur de tension haute Vcc_d.

Notamment, dans l'exemple de réalisation représenté, la tension de charge est supérieure ou égale à la somme de la tension d'alimentation requise par le composant numérique 13 et d'une tension de décalage produite par la diode d'entrée 29.

La phase d'interrogation comprend une étape d'émission d'un signal numérique d'interrogation au cours de laquelle le système de contrôle 3 émet un signal numérique d'interrogation du composant numérique 13 pendant un troisième intervalle de temps T3.

Le signal numérique d'interrogation dépend du composant numérique 13, par exemple être spécifique de la mémoire 17 et varie de manière discontinue entre une tension haute d'interrogation et une tension basse d'interrogation. La tension haute d'interrogation peut être choisie supérieure à la tension de seuil de la diode d'entrée 29, par exemple égale à Vcc_d, et la tension basse d'interrogation peut être choisie, par exemple, nulle.

La phase de réponse comprend une étape de réception d'un signal numérique de réponse au cours de laquelle le système de contrôle 3 reçoit un signal numérique de réponse du composant numérique13 pendant un quatrième intervalle de temps T4.

Le signal numérique de réponse dépend du composant numérique 13 et varie de manière discontinue entre une tension haute de réponse et une tension basse de réponse. La tension haute de réponse peut être choisie supérieure à la tension de seuil de la diode d'entrée 29, par exemple égale à Vcc_d, et la tension basse de réponse peut être choisie, par exemple, non-nulle. La tension basse de réponse non nulle est due à la résistance d'entrée 26 et à la résistance de sortie 35 ainsi qu'à la diode d'entrée 29 et la diode de blocage 31

Le signal numérique de réponse est, par exemple, représentatif de données stockées dans la mémoire 17.

Selon l'invention, le premier intervalle de temps T1, le deuxième intervalle de temps T2, le troisième intervalle de temps T3 et le quatrième intervalle de temps T4 sont distincts et se suivent dans un ordre prédéterminé. Une telle configuration permet de mettre en oeuvre un multiplexage temporel afin de communiquer avec le composant analogique 11 et le composant numérique 13 sur l'unique câble 7.

De plus, le signal analogique varie dans une plage de tensions limitée, aux bornes inférieures, à la valeur haute des tensions de charge, d'interrogation et de réponse.

Un tel décalage en tension entre le signal analogique et le signal numérique permet, associé au multiplexage temporel, de ne pas perturber les composants analogiques et les composants numériques lors des communications qui ne leurs sont par destinées.

Ainsi, le procédé de communication selon l'invention permet une communication de signaux à la fois analogiques et numériques sur un câble unique, afin de contrôler un capteur passif installé dans un environnement difficile d'accès et comprenant un composant numérique, tel qu'une mémoire, sans nécessiter de câblage supplémentaire.

## Revendications

1. Procédé de communication d'un système de contrôle (3) avec un capteur (5) comprenant un composant analogique (11) et un composant numérique (13),
le système de contrôle (3) étant connecté au capteur (5) par un unique câble (7), notamment comprenant une âme centrale et une couche de blindage périphérique, le procédé de communication comprenant au moins :
- Une étape d'émission d'un signal analogique, au cours de laquelle le système de contrôle (3) émet un signal analogique, pendant un premier intervalle de temps (T1) ;
- Une étape de réception d'une réponse, au cours de laquelle le système de contrôle (3) reçoit une réponse du composant analogique (11) ;
- Une étape d'émission d'un signal numérique d'interrogation, au cours de laquelle le système de contrôle (3) émet un signal numérique d'interrogation du composant numérique (13), pendant un troisième intervalle de temps (T3) ; et
- Une étape de réception d'un signal numérique de réponse, au cours de laquelle le système de contrôle (3) reçoit un signal numérique de réponse du composant numérique (13), pendant un quatrième intervalle de temps (T4) ;
**caractérisé en ce que**
- le signal analogique varie dans une plage de tensions s'étendant entre une borne inférieure et une borne supérieure,
- le signal numérique d'interrogation présente une tension haute d'interrogation,
- le signal numérique de réponse présente une tension haute de réponse,
et **en ce que** la tension haute d'interrogation et la tension haute de réponse sont supérieures à la borne supérieure du signal analogique.

2. Procédé de communication selon la revendication 1, **caractérisé en ce qu'**il comprend au moins une étape d'émission d'une tension, au cours de laquelle le système de contrôle (3) émet une tension de charge du composant numérique (13), pendant un deuxième intervalle de temps (T2).

3. Procédé de communication selon la revendication 2, **caractérisé en ce que** le premier intervalle de temps (T1), le deuxième intervalle de temps (T2), le troisième intervalle de temps (T3) et le quatrième intervalle de temps (T4) sont distincts et se suivent dans un ordre prédéterminé.

4. Procédé de communication selon l'une quelconque des revendications 1, dans lequel la tension haute d'interrogation est égale à la tension haute de réponse et/ou à la tension de charge.

5. Procédé de communication selon l'une quelconque des revendications précédentes, dans lequel la tension de charge est supérieure à la borne supérieure du signal analogique.

6. Procédé de communication selon l'une quelconque des revendications précédentes, dans lequel le signal numérique d'interrogation présente une tension basse d'interrogation nulle et/ou dans lequel le signal numérique de réponse présente une tension basse de réponse non-nulle.

7. Procédé de communication selon la revendication 3, dans lequel la tension basse de réponse est inférieure, notamment strictement inférieure, à la borne supérieure du signal analogique.

8. Procédé de communication selon l'une quelconque des revendications précédentes, dans lequel le composant numérique (13) est une mémoire morte effaçable et programmable électriquement.

9. Procédé de communication selon la revendication précédente, dans lequel le signal numérique de réponse représente des données relatives au capteur (5) stockées sur le composant numérique (13), en particulier les données comprenant des données de calibration du composant analogique (11).

10. Ensemble (1) comprenant :
- un système de contrôle (3),
- un capteur (5) comprenant un composant analogique (11) et un composant numérique (13), et
- un unique câble (7), notamment comprenant une âme centrale et une couche de blindage périphérique, apte à connecter le système de contrôle (3) au capteur (5),
l'ensemble (1) étant configuré pour mettre en œuvre un procédé de communication selon l'une quelconques des revendications précédentes.

## Patentansprüche

1. Kommunikationsverfahren eines Steuersystems (3) mit einem Sensor (5), umfassend eine analoge Komponente (11) und eine digitale Komponente (13),
wobei das Steuersystem (3) mit dem Sensor (5) über ein einziges Kabel (7) verbunden ist, das insbesondere einen Innenleiter und eine periphere Abschirmschicht umfasst, wobei das Kommunikationsverfahren mindestens umfasst:
- einen Schritt zum Senden eines analogen Signals, bei dem das Steuersystem (3) ein analoges Signal während eines ersten Zeitintervalls (T1) sendet;
- einen Schritt zum Empfangen einer Antwort, bei dem das Steuersystem (3) eine Antwort von der analogen Komponente (11) empfängt;
- einen Schritt zum Senden eines digitalen Abfragesignals, bei dem das Steuersystem (3) ein digitales Abfragesignal der digitalen Komponente (13) während eines dritten Zeitintervalls (T3) sendet; und
- einen Schritt zum Empfangen eines digitalen Antwortsignals, bei dem das Steuersystem (3) ein digitales Antwortsignal von der digitalen Komponente (13) während eines vierten Zeitintervalls (T4) empfängt;
**dadurch gekennzeichnet, dass**
- das analoge Signal in einem Spannungsbereich variiert, der sich zwischen einer unteren Grenze und einer oberen Grenze erstreckt,
- das digitale Abfragesignal eine hohe Abfragespannung aufweist,
- das digitale Antwortsignal eine hohe Antwortspannung aufweist,
und dadurch, dass die hohe Abfragespannung und die hohe Antwortspannung höher als die obere Grenze des analogen Signals sind.

2. Kommunikationsverfahren nach Anspruch 1, **dadurch gekennzeichnet, dass** es mindestens einen Schritt des Sendens einer Spannung umfasst, bei dem das Steuersystem (3) eine Ladespannung der digitalen Komponente (13) während eines zweiten Zeitintervalls (T2) sendet.

3. Kommunikationsverfahren nach Anspruch 2, **dadurch gekennzeichnet, dass** das erste Zeitintervall (T1), das zweite Zeitintervall (T2), das dritte Zeitintervall (T3) und das vierte Zeitintervall (T4) voneinander verschieden sind und in einer vorherbestimmten Reihenfolge aufeinanderfolgen.

4. Kommunikationsverfahren nach einem der Ansprüche 1, bei dem die hohe Abfragespannung gleich der hohen Antwortspannung und/oder der Ladespannung ist.

5. Kommunikationsverfahren nach einem der vorhergehenden Ansprüche, bei dem die Ladespannung höher als die obere Grenze des analogen Signals ist.

6. Kommunikationsverfahren nach einem der vorhergehenden Ansprüche, bei dem das digitale Abfragesignal eine niedrige Abfragespannung von Null aufweist und/oder bei dem das digitale Antwortsignal eine von Null verschiedene niedrige Antwortspannung aufweist.

7. Kommunikationsverfahren nach Anspruch 3, bei dem die niedrige Antwortspannung niedriger, insbesondere strikt niedriger, als die obere Grenze des analogen Signals ist.

8. Kommunikationsverfahren nach einem der vorhergehenden Ansprüche, bei dem die digitale Komponente (13) ein elektrisch löschbarer und programmierbarer Festwertspeicher ist.

9. Kommunikationsverfahren nach dem vorhergehenden Anspruch, bei dem das digitale Antwortsignal Daten bezüglich des Sensors (5) darstellt, die auf der digitalen Komponente (13) gespeichert sind, wobei insbesondere die Daten Kalibrierungsdaten der analogen Komponente (11) umfassen.

10. Anordnung (1), umfassend:
- ein Steuersystem (3),
- einen Sensor (5), der eine analoge Komponente (11) und eine digitale Komponente (13) umfasst, und
- ein einziges Kabel (7), das insbesondere einen Innenleiter und eine periphere Abschirmschicht umfasst, das geeignet ist, das Steuersystem (3) mit dem Sensor (5) zu verbinden,
wobei die Anordnung (1) dazu konfiguriert ist, ein Kommunikationsverfahren nach einem der vorhergehenden Ansprüche zu implementieren.

## Claims

1. Communication method of a control system (3) with a sensor (5) comprising an analog component (11) and a digital component (13),
the control system (3) being connected to the sensor (5) by a single cable (7), in particular comprising a central core and a peripheral shielding layer, the communication method comprising at least:
- a step of transmitting an analog signal, during which the control system (3) transmits an analog signal, during a first time interval (T1);
- a step of receiving a response, during which the control system (3) receives a response from the analog component (11);
- a step of transmitting a digital interrogation signal, during which the control system (3) transmits a digital interrogation signal of the digital component (13), during a third time interval (T3); and
- a step of receiving a digital response signal, during which the control system (3) receives a digital response signal from the digital component (13), during a fourth time interval (T4);
**characterized in that**
- the analog signal varies within a voltage range extending between a lower limit and an upper limit,
- the digital interrogation signal has a high interrogation voltage,
- the digital response signal has a high response voltage,
and **in that** the high interrogation voltage and the high response voltage are greater than the upper limit of the analog signal.

2. Communication method according to claim 1, **characterized in that** it comprises at least a step of transmitting a voltage, during which the control system (3) transmits a charging voltage of the digital component (13), during a second time interval (T2).

3. Communication method according to claim 2, **characterized in that** the first time interval (T1), the second time interval (T2), the third time interval (T3) and the fourth time interval (T4) are distinct and follow one another in a predetermined order.

4. Communication method according to any one of claims 1, wherein the high interrogation voltage is equal to the high response voltage and/or to the charging voltage.

5. Communication method according to any one of the preceding claims, wherein the charging voltage is greater than the upper limit of the analog signal.

6. Communication method according to any one of the preceding claims, wherein the digital interrogation signal has a zero low interrogation voltage and/or wherein the digital response signal has a non-zero low response voltage.

7. Communication method according to claim 3, wherein the low response voltage is lower than, in particular strictly lower than, the upper limit of the analog signal.

8. Communication method according to any one of the preceding claims, wherein the digital component (13) is an electrically erasable and programmable read-only memory.

9. Communication method according to the preceding claim, wherein the digital response signal represents data relating to the sensor (5) stored on the digital component (13), in particular the data comprising calibration data of the analog component (11).

10. Assembly (1) comprising:
- a control system (3),
- a sensor (5) comprising an analog component (11) and a digital component (13), and
- a single cable (7), in particular comprising a central core and a peripheral shielding layer, suitable for connecting the control system (3) to the sensor (5),
the assembly (1) being configured to implement a communication method according to any one of the preceding claims.
